# EUROPEAN PATENT SPECIFICATION

(11) **EP 3 315 265 B1**
(45) Date of publication and mention of the grant of the patent: **27.01.2021**
(21) Application number: 17192047.3
(22) Date of filing: 20.09.2017
(51) Int. Cl.: B25G 1/10

(54) **BRUSH HANDLE AND METHOD FOR MANUFACTURING SAME**
BÜRSTENGRIFF UND VERFAHREN ZUR HERSTELLUNG DAVON
POIGNÉE DE BROSSE ET SON PROCÉDÉ DE FABRICATION

(30) Priority: 17.10.2016 KR 20160134333
(43) Date of publication of application: 02.05.2018
(73) Proprietor: F.S. Korea Industries Inc., Gangbuk-gu, Seoul 10162 (KR)
(72) Inventor: Hwang, Jae Kwang, Seoul (KR)
(74) Representative: Gulde & Partner

(56) References cited:
- DE-U1-202016 002 447
- JP-A- 2004 290 750
- KR-B1- 101 463 541
- US-A1- 2003 190 485
- US-A1- 2012 055 902

## Description

### BACKGROUND OF THE INVENTION

### Field of the Invention

The present invention relates to method of manufacturing a brush handle and, more particularly, to a method of manufacturing a brush handle having a metal surface material at a low cost by depositing metal on a wood material substrate and a brush handle manufactured by the method.

### Background Art

Generally, brushes are used in many ways from writing or painting to the women's use for make-up or nail art. Depending on the use or purpose of the brush, the size and shape of the brush as well as the type and length of the hair of the brush are determined in various ways.

Since such a brush is hand held by a user when using the same, the handle thereof has various shapes to enable convenient gripping and is manufactured in various colors and textures so as to have aesthetics as well as functionality.

As a method for making the appearance of a brush handle brilliant, there has been used a method of depositing metal such as silver or aluminum on a handle material so as to have metallic luster. However, in order to deposit metal, there has been a problem that it is necessary to separately manufacture a mold for a base material such as plastics or glass so that the process cost thereof is inefficiently high or the material itself is expensive to be used.

Furthermore, in the case of wood materials, there are advantages that it is not necessary to produce a mold separately and a large number of handles can be manufactured at a low cost since the wood materials are light in weight. However, such a wood handle still has a disadvantage that it contains moisture inside and thus cannot withstand a high temperature deposition process during the metal deposition, thereby being blackened or burned out. Manufacturing methods are for example known from KR 101 463 541 B1.

Therefore, there is a need for a technique for depositing metal on the surface of a wood material in a stable manner so as to obtain metal luster while using a wood material as the material of the brush handle.

### SUMMARY OF THE INVENTION

Accordingly, the present invention has been made to solve the above-mentioned problems occurring in the prior arts, and it is an objective of the present invention to provide a method for manufacturing a brush handle, in which a metal is stably deposited on a wood material that has conventionally been difficult to deposit metal.

To accomplish the above objectives there is provided a method for manufacturing a brush handle accroding to claim 1.

According to the present invention, the first paint coating step may be performed by dipping, and the method for manufacturing a brush handle according to the present invention may further comprise the steps of cleaning and drying the wood material coated with the first paint, after the first paint coating step.

According to the present invention, the first primer layer includes one or more selected from the group consisting of polyethylene terephthalate(PET), polymethyl methacrylate(PMMA), Polycarbonate(PC), and acrylonitrile butadiene styrene(ABS).

In addition, according to the present invention, the metal includes at least one selected from gold, silver, copper, chromium and aluminum.

According to a further embodiment of the present invention, there is provided a method for manufacturing a brush handle, in which the metal deposition layer forming step is performed by a vacuum deposition method.

According to the present invention, the second paint coating step may be performed by spraying, wherein the spraying is performed using 16 to 24 spray guns.

Besides, there is provided a brush handle, comprising: a wood material; a first primer layer formed on the wood material; a metal deposition layer formed on the first primer layer; and a second primer layer formed on the metal deposition layer.

Further, there is provided a brush handle, comprising: a wood material; a first paint layer formed on the wood material; a first primer layer formed on the first paint layer; a first UV coating layer formed on the first primer layer; a metal deposition layer formed on the first UV coating layer; a second primer layer formed on the metal deposition layer; a second paint layer formed on the second primer layer; and a second UV coating layer formed on the second paint layer.

According to the present invention, by improving the problem that a wood material is burned out or metal deposition is not made uniform by a high temperature deposition process which occurs previously when a metal is deposited on a wood material, it is possible to stably form a metal deposition layer on the surface of the wood material without blackening or burning the wood material. In addition, it is possible to manufacture a brush handle having metallic surface gloss by using a wood material as a base material without forming a separate mold or using an expensive material, thereby manufacturing a brush handle of luxurious appearance at a low cost.

### BRIEF DESCRIPTION OF DRAWINGS

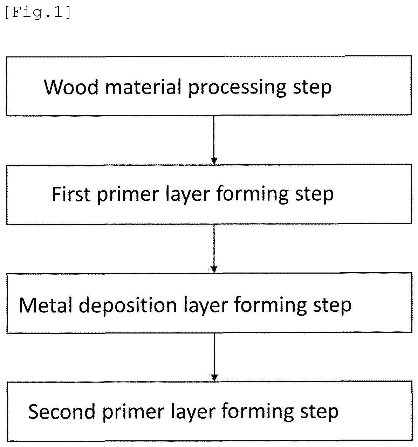

Fig. 1 is a flow chart illustrating a method of manufacturing a brush handle according to an embodiment of the present invention,

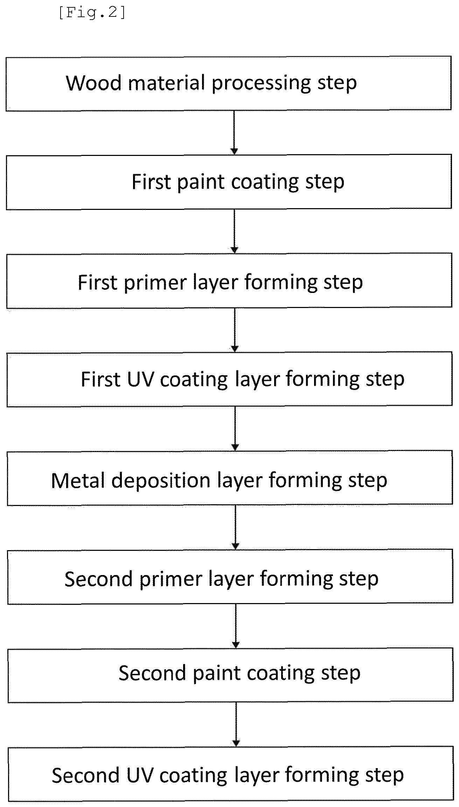

Fig. 2 is a flow chart of a method of manufacturing a brush handle according to another embodiment of the present invention, and

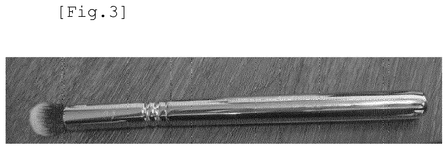

Fig. 3 shows a brush equipped with a brush handle manufactured by a manufacturing method according to the present invention.

### DETAILED DESCRIPTION OF THE PREFERRED EMBODIMENT

The present invention relates to a method for manufacturing a wood material handle for a brush, on which a metal is deposited, and the method includes the steps as described in claim 1.

Hereinafter, the specific manufacturing method according to the present invention will be described step by step as follows.

### 1. Wood material processing step

In order to manufacture the brush handle of the present invention, a wood material that can be used as a handle is first provided and the step of processing the wood material into the appearance of a brush handle to be manufactured is carried out. It is preferable that the wood material is dried for a sufficient time before processing.

The wood material is processed in the form of a handle to be finally manufactured, wherein it is preferable that the wood material is processed to have a predetermined marginal length additionally. That is, the shape of the wood material is formed into a shape having a length longer than the length of the brush handle to be finally completed. In the present description, the wording "marginal length" means an additional length portion added to the final handle portion.

By processing the wood material so as to have a marginal length, the wood material can be easily and firmly fixed to a jig, and the wood material can be prevented from being released in subsequent steps. In addition, since the wood material contains moisture therein even though the wood material is sufficiently dried, the wood material may be blackened due to the water being discharged from the wood material at a high temperature during a later metal deposition process. If the vacuum deposition process is performed by fixing the wood material on the jig such that the marginal length portion is directed in the downward direction, the metal can be stably deposited on the wood material by adjustment so that the soot is formed only to the marginal length portion and is not actually formed in the portion to be used as a handle. To this end, it is preferable that the marginal length is formed in the range of 1 to 6 cm and preferably 3 to 5 cm.

### 2. First paint coating step

In one embodiment of the present invention, the processed wood material may be subjected to a process of forming a film by coating first paint. By forming the paint film in this manner, the pores of the wood can be blocked such that the coating can be smoothly formed when the primer layer or the metal deposition layer is formed later. The first paint may be selected from white or black depending on the color of the handle to be finally completed, wherein if the color of a final handle is bright, it is preferable to set the first paint to white, and the color of a final handle is dark, it is preferable to set the first paint to black. By coating the first paint in this way, the amount of the paint to be used in the step of coating the second paint can be effectively reduced.

The coating of the first paint is preferably carried out by a dipping method, in which the processed wood material is immersed in a bath containing the paint and then removed. In addition, it is preferable that the coating of the first paint is applied only to the portion to be actually used as the handle except for the marginal portion.

After the coating of the first paint is formed as described above, it is preferable to carry out a cleaning operation to remove grease from the surface. If the cleaning operation is not performed, the primer layer or the metal deposition layer may not be properly adhered to the surface, resulting in the nonuniformity of the surface.

Further, in one embodiment of the present invention, the wood material, for which the washing operation is completed, may be subjected to a drying step. If the wood material is dried and the internal moisture thereof is sufficiently removed, then the wood material can withstand the metal deposition process of high temperature without burning.

### 3. First primer layer forming step

The first primer layer can be formed on the first paint by applying a resin material to the wood material that has been cleaned according to the above-described steps. By forming the primer layer on the wood material, it is possible to form the deposition layer more stably in the next step of depositing metal.

The resin material which may be used for the first primer layer includes, for example, polyethylene terephthalate(PET), polymethyl methacrylate(PMMA), polycarbonate(PC), acrylonitrile butadiene styrene(ABS) and the like, and acrylonitrile butadiene styrene(ABS) may be most preferably used in view of workability and quality control.

The first primer layer may be formed by applying a resin material by a known method and it is preferably to use a spraying method, in which a spray gun is used. The first primer layer may be formed to a thickness of 30 to 100 *µ*m, preferably 35 to 50 *µ*m.

### 4. First UV coating layer forming step

In one embodiment of the present invention, the handle with the first primer layer may have a UV coating layer formed on the first primer layer. The UV coating layer is not particularly limited and may be formed through a commonly used process. For example, the UV coating layer may by formed by a spraying method of spraying a UV coating solution, which includes 40 to 55 wt% of a polyester acrylate oligomer, 5 to 10 wt% of an ultraviolet curing initiator, 35 to 40 wt% of an acrylate monomer, and 5 to 10 wt% of additives, by means of spray guns. When the UV coating layer is coated by spraying, it is preferable to carry out the spraying by using 16 to 24 spray guns.

The UV coating layer is preferably coated to a thickness of 1 to 10 *µ*m. By setting the thickness of the UV coating layer in this manner, it is possible to improve the light resistance, chemical resistance, a high gloss finish, scratch resistance, abrasion resistance, etc. of a product surface.

In one embodiment of the present invention, a method for manufacturing a brush handle may further include the step of drying the handle having the first UV coating layer. This step is to remove the moisture remaining in the wood material so that the wood material can withstand without burning the following metal deposition step of high temperatures.

### 5. Metal deposition layer forming step

The handle with the first primer layer (or the first UV coating layer formed thereon) can have a metallic lustrous surface by depositing metal on the surface thereof later. Previously, it is technically difficult to deposit metal on the surface of the wood material containing moisture, since metal deposition generally uses high temperature steam. According to the method of the present invention, it is possible to reliably deposit metal on the wood material by adjusting, in the initial wood material processing step, the length of the processed wood material longer than the length of a finished handle such that the blackening of the wood material caused by the moisture is limited to the marginal length. Also, as a pre-metal deposition step, the surface of the wood material is coated with a polymer resin material such that the metal material can be stably deposited on the surface of the wood material in a similar manner to depositing the metal on the surface of a plastic material.

The metal used for the deposition may be one or more selected from gold, silver, copper, chromium, aluminum, etc., and it is preferable to deposit silver. In addition, the metal deposition layer is preferably formed to a thickness of 10 to 1000 *µ*m.

It is preferable to employ a vacuum deposition method in the deposition step. Since the wood material is easily blackened or burned at a high temperature, the deposition can be carried out stably under a completely vacuum condition so that the metal deposition layer can be reliably formed without burning the wood material.

### 6. Second primer layer forming step

In the present invention, after the metal deposition layer is formed, a second primer layer is formed on the metal deposition layer. The second primer layer may be formed using the same material by the same method as the first primer layer.

### 7. Second paint coating step

In an embodiment of the present invention, after the second primer layer is formed, second paint may be coated on the second primer layer so that the finished handle may exhibit various colors. Herein, since color variation may be increased and color aggregation may occur when the coating material is mixed with a UV coating liquid, it is preferable to carry out the coating of the paint separately from the UV coating.

The second paint may be coated on the second primer layer by a spraying method using a spray gun, wherein the spraying is preferably performed using 16 to 24 spray guns.

### 8. Second UV coating layer forming step

The handle with the second primer layer (or the second paint thereon) can have a second UV coating layer, which can protect the surface thereof finally. Such a second UV coating layer can be formed in the same manner as the first UV coating layer as described above.

In an embodiment of the present invention, the handle formed with the second UV coating layer may be subject to an additional drying step.

The brush handle manufactured by the above-described process can be completed by cutting the marginal length portion to a desired size by laser processing or the like.

The presented method results in a brush handle, including: a wood material; a first primer layer formed on the wood material; a metal deposition layer formed on the first primer layer; and a second primer layer formed on the metal deposition layer. Each of the layers constituting the brush handle may be formed according to the process as described above.

In another example, a brush handle includes: a wood material; a first paint layer formed on the wood material; a first primer layer formed on the first paint layer; a first UV coating layer formed on the first primer layer; a metal deposition layer formed on the first UV coating layer; a second primer layer formed on the metal deposition layer; a second paint layer formed on the second primer layer; and a second UV coating layer formed on the second paint layer. Each of the layers constituting the brush handle may be formed according to the process as described above.

While the present invention has been particularly shown and described with reference to exemplary embodiments thereof, it should be understood that the present invention is not limited to the disclosed embodiments, but, on the contrary, it should be understood that the present invention may be embodied with various changes and modifications. The technical scope of the present invention is set out by the claims.

## Claims

1. A method for manufacturing a brush handle, comprising the steps of:
processing a wood material into a predetermined shape;
forming a first primer layer on the processed wood material;
forming a metal deposition layer by depositing metal on the first primer layer; and
forming a second primer layer on the metal deposition layer, wherein the processed wood material has a marginal length of 1 to 6 cm, and
wherein the method further comprises the step of cutting the marginal length, after the second primer layer forming step.

2. The method for manufacturing a brush handle according to claim 1, further comprising the steps of:
coating a first paint on the processed wood material, after the wood material processing step; and
coating a second paint on the second primer layer, after the second primer layer forming step.

3. The method for manufacturing a brush handle according to claim 2, wherein the first paint coating step is performed by dipping.

4. The method for manufacturing a brush handle according to claim 2, further comprising the step of cleaning the wood material coated with the first paint, after the first paint coating step.

5. The method for manufacturing a brush handle according to claim 2, further comprising the step of drying the wood material coated with the first paint, after the first paint coating step.

6. The method for manufacturing a brush handle according to claim 1, wherein the first primer layer includes one or more selected from the group consisting of polyethylene terephthalate(PET), polymethyl methacrylate(PMMA), Polycarbonate(PC), and acrylonitrile butadiene styrene(ABS).

7. The method for manufacturing a brush handle according to claim 1, further comprising the step of forming a first UV coating layer after the first primer layer forming step.

8. The method for manufacturing a brush handle according to claim 7, further comprising a drying step after the first UV coating layer forming step.

9. The method for manufacturing a brush handle according to claim 1, wherein the metal includes at least one selected from gold, silver, copper, chromium and aluminum.

10. The method for manufacturing a brush handle according to claim 1, wherein the metal deposition layer forming step is performed by a vacuum deposition method.

11. The method for manufacturing a brush handle according to claim 2, wherein the second paint coating step is performed by spraying.

12. The method for manufacturing a brush handle according to claim 11, wherein the spraying is performed using 16 to 24 spray guns.

13. The method for manufacturing a brush handle according to claim 1, further comprising the step of forming a second UV coating layer on the second primer layer.

## Patentansprüche

1. Verfahren zur Herstellung eines Bürstengriffs, umfassend die folgenden Schritte:
Verarbeiten eines Holzmaterials zu einer vorbestimmten Form;
Ausbilden einer ersten Grundierungsschicht auf dem verarbeiteten Holzmaterial;
Ausbilden einer Metallablagerungsschicht durch Ablagern von Metall auf der ersten Grundierungsschicht; und
Ausbilden einer zweiten Grundierungsschicht auf der Metallablagerungsschicht, wobei das verarbeitete Holzmaterial eine Randlänge von 1 bis 6 cm aufweist, und
wobei das Verfahren ferner den Schritt des Schneidens der Randlänge umfasst, nach dem Schritt des Ausbildens der zweiten Grundierungsschicht.

2. Verfahren zur Herstellung eines Bürstengriffs nach Anspruch 1, ferner umfassend die folgenden Schritte:
Beschichten des verarbeiteten Holzmaterials mit einer ersten Farbe nach dem Schritt des Verarbeitens des Holzmaterials; und
Beschichten der zweiten Grundierungsschicht mit einer zweiten Farbe nach dem Schritt des Ausbildens der zweiten Grundierungsschicht.

3. Verfahren zur Herstellung eines Bürstengriffs nach Anspruch 2, wobei der Schritt des Beschichtens mit der ersten Farbe durch Eintauchen ausgeführt wird.

4. Verfahren zur Herstellung eines Bürstengriffs nach Anspruch 2, ferner umfassend den Schritt des Reinigens des Holzmaterials, das mit der ersten Farbe beschichtet ist, nach dem Schritt des Beschichtens mit der ersten Farbe.

5. Verfahren zur Herstellung eines Bürstengriffs nach Anspruch 2, ferner umfassend den Schritt des Trocknens des Holzmaterials, das mit der ersten Farbe beschichtet ist, nach dem Schritt des Beschichtens mit der ersten Farbe.

6. Verfahren zur Herstellung eines Bürstengriffs nach Anspruch 1, wobei die erste Grundierungsschicht eines oder mehr ausgewählt aus der Gruppe bestehend aus Polyethylen-Terephthalat (PET), Polymethyl-Methacrylat (PMMA), Polycarbonat (PC) und Acrylnitril-Butadien-Styrol (ABS) umfasst.

7. Verfahren zur Herstellung eines Bürstengriffs nach Anspruch 1, ferner umfassend den Schritt des Ausbildens einer ersten UV-Beschichtungsschicht nach dem Schritt des Ausbildens der ersten Grundierungsschicht.

8. Verfahren zur Herstellung eines Bürstengriffs nach Anspruch 7, ferner umfassend einen Schritt des Trocknens nach dem Schritt des Ausbildens der ersten UV-Beschichtungsschicht.

9. Verfahren zur Herstellung eines Bürstengriffs nach Anspruch 1, wobei das Metall mindestens eines ausgewählt aus Gold, Silber, Kupfer, Chrom und Aluminium umfasst.

10. Verfahren zur Herstellung eines Bürstengriffs nach Anspruch 1, wobei der Schritt des Ausbildens der Metallablagerungsschicht durch ein Vakuumablagerungsverfahren ausgeführt wird.

11. Verfahren zur Herstellung eines Bürstengriffs nach Anspruch 2, wobei der Schritt des Beschichtens mit der zweiten Farbe durch Sprühen ausgeführt wird.

12. Verfahren zur Herstellung eines Bürstengriffs nach Anspruch 11, wobei das Sprühen unter Verwendung von 16 bis 24 Sprühpistolen ausgeführt wird.

13. Verfahren zur Herstellung eines Bürstengriffs nach Anspruch 1, ferner umfassend den Schritt des Ausbildens einer zweiten UV-Beschichtungsschicht und der zweiten Grundierungsschicht.

## Revendications

1. Procédé de fabrication d'une poignée de brosse, comprenant les étapes suivantes :
le façonnage d'un matériau à base de bois en une forme prédéterminée ;
la formation d'une première couche d'apprêt sur le matériau à base de bois façonné ;
la formation d'une couche de dépôt de métal par dépôt de métal sur la première couche d'apprêt ; et
la formation d'une deuxième couche d'apprêt sur la couche de dépôt de métal, le matériau à base de bois façonné ayant une longueur marginale de 1 à 6 cm, et
le procédé comprenant en outre l'étape de coupe de la longueur marginale, après l'étape de formation de la deuxième couche d'apprêt.

2. Procédé de fabrication d'une poignée de brosse selon la revendication 1, comprenant en outre les étapes suivantes :
le revêtement d'une première peinture sur le matériau à base de bois façonné, après l'étape de façonnage du matériau à base de bois ; et
le revêtement d'une deuxième peinture sur la deuxième couche d'apprêt, après l'étape de formation de la deuxième couche d'apprêt.

3. Procédé de fabrication d'une poignée de brosse selon la revendication 2, dans lequel l'étape de revêtement de la première peinture est réalisée par trempage.

4. Procédé de fabrication d'une poignée de brosse selon la revendication 2, comprenant en outre l'étape de nettoyage du matériau à base de bois revêtu avec la première peinture, après l'étape de revêtement de la première peinture.

5. Procédé de fabrication d'une poignée de brosse selon la revendication 2, comprenant en outre l'étape de séchage du matériau à base de bois revêtu avec la première peinture, après l'étape de revêtement de la première peinture.

6. Procédé de fabrication d'une poignée de brosse selon la revendication 1, dans lequel la première couche d'apprêt inclut un ou plusieurs choisis dans le groupe constitué par le polytéréphtalate d'éthylène (PET), le polyméthacrylate de méthyle (PMMA), le polycarbonate (PC) et l'acrylonitrile-butadiène-styrène (ABS).

7. Procédé de fabrication d'une poignée de brosse selon la revendication 1, comprenant en outre l'étape de formation d'une première couche de revêtement UV après l'étape de formation de la première couche d'apprêt.

8. Procédé de fabrication d'une poignée de brosse selon la revendication 7, comprenant en outre une étape de séchage après l'étape de formation d'une première couche de revêtement UV.

9. Procédé de fabrication d'une poignée de brosse selon la revendication 1, dans lequel le métal inclut au moins un sélectionné parmi l'or, l'argent, le cuivre, le chrome et l'aluminium.

10. Procédé de fabrication d'une poignée de brosse selon la revendication 1, dans lequel l'étape de formation d'une couche de dépôt de métal est réalisée par un procédé de dépôt sous vide.

11. Procédé de fabrication d'une poignée de brosse selon la revendication 2, dans lequel l'étape de revêtement d'une deuxième peinture est réalisée par pulvérisation.

12. Procédé de fabrication d'une poignée de brosse selon la revendication 11, dans lequel la pulvérisation est réalisée en utilisant 16 à 24 pistolets de pulvérisation.

13. Procédé de fabrication d'une poignée de brosse selon la revendication 1, comprenant en outre l'étape de formation d'une deuxième couche de revêtement UV sur la deuxième couche d'apprêt.
